# EUROPEAN PATENT APPLICATION

(11) **EP 4 606 611 A1**
(43) Date of publication of application: **27.08.2025**
(21) Application number: 23898037.9
(22) Date of filing: 27.09.2023
(51) Int. Cl.: B60K 6/22, F16C 19/54

(54) **HYBRID DRIVING MODULE**

(30) Priority: 28.11.2022 KR 20220162004
(71) Applicant: Valeo Kapec Co., Ltd., Daegu 42709 (KR)
(72) Inventor: KIM, Jung-Woo, Daegu 42709 (KR); PARK, Jin-Su, Daegu 42709 (KR); JO, A-Ron, Daegu 42709 (KR)
(74) Representative: Isarpatent
(86) International application number: PCT/KR2023/015027
(87) International publication number: WO 2024/117503

(57) **Abstract**

The present invention relates to a hybrid driving module, in which components connected relatively rotatably are securely supported in an axial direction and the components are easily assembled, and the hybrid driving module includes a housing to which a stator is fixed, a rotor hub to which a rotor is fixed, the rotor hub being disposed rearward of the housing in an axial direction, a hub ridge disposed between the housing and the rotor hub and connected to the rotor hub at a radial outer side thereof so as to be restricted in rotation, a ridge bearing disposed between the hub ridge and the housing and configured to connect the hub ridge and the housing so that the hub ridge is rotatable relative to the housing, and a ridge fixing member detachably fastened to the rotor hub to restrict a forward movement of the hub ridge relative to the rotor hub. The ridge bearing aligns the hub ridge and the housing in a radial direction and restricts the hub ridge and the housing in the two axial directions, and an assembling hole is provided in a portion of the housing that faces a fastening portion between the ridge fixing member and the hub ridge in the axial direction.

## Description

### [Technical Field]

This application claims priority to and the benefit of Korean Patent Application No. 10-2022-0162004 filed in the Korean Intellectual Property Office on November 28, 2022, the entire contents of which are incorporated herein by reference.

The present invention relates to a hybrid driving module, and more particularly, to a hybrid driving module in which components connected to be relatively rotatable are easily assembled while being securely supported in an axial direction.

### [Background Art]

A driving module used for a hybrid vehicle has a structure configured to transmit a force of a motor and a force of an engine to a transmission. The hybrid driving module includes an input member configured to receive the force from the engine, a housing configured to support a stator, a rotor hub configured to support a rotor, an engine clutch disposed between the input member and the rotor hub and configured to connect the input member and the rotor hub, an output member configured to receive the force of the motor and/or the force of the engine from the rotor hub and transmit the force to the transmission, and a power transmission part disposed between the rotor hub and the output member and configured to connect the rotor hub and the output member. The power transmission part may have a structure including a torque converter and a lock-up clutch disposed in parallel in a power system.

The housing and the stator are stationary components, whereas the input member, the rotor hub, the engine clutch, the output member, and the power transmission part are rotatable components. In order to modularize the hybrid driving module, the stationary components and the rotatable components are rotatably connected to each other and connected to be restricted in two axial directions.

A structure of the hybrid driving module disclosed in Korean Patent No. KR 10-2239269 B1 will be described. A forward movement of a rotor hub (in a direction in which the rotor hub moves toward a housing in an axial direction) may be suppressed by a ridge bearing and a hub shaft bearing, but a rearward movement of the rotor hub (in a direction in which the rotor hub moves away from the housing in the axial direction) cannot be suppressed by the ridge bearing and the hub shaft bearing. In addition, a rearward movement of an input member may be suppressed by an input shaft bearing, but a forward movement of the input member cannot be suppressed by the input shaft bearing and the hub shaft bearing.

In order to solve the above-mentioned problem, the structure needs to be changed so that the ridge bearing may suppress the rearward movement of the rotor hub, and the structure needs to be changed so that the input shaft bearing or the hub shaft bearing may suppress the forward movement of the input member.

However, the structural change requires a large number of additional components and is accompanied by a complicated assembling process. Further, once the structure is assembled, it is difficult to disassemble the structure, which may cause a problem in that maintenance is very troublesome.

### [Disclosure]

### [Technical Problem]

The present invention has been made in an effort to solve the above-mentioned problem, and an object of the present invention is to provide a hybrid driving module capable of making assembling and disassembling processes easy while minimizing an increase in the number of components for implementing a structure in which the components connected to be relatively rotatable are securely supported in an axial direction.

Another object of the present invention is to provide a hybrid driving module capable of reducing costs by minimizing the application of a bearing configured to support rotations in both radial and axial directions and used to implement a structure in which components connected to be relatively rotatable are securely supported in the axial direction.

Still another object of the present invention is to provide a hybrid driving module capable of costs by minimizing the use of a bearing having a large capacity and used to implement a structure in which components connected to be relatively rotatable are securely supported in an axial direction.

The technical objects of the present invention are not limited to the above-mentioned objects, and other objects and advantages of the present invention, which are not mentioned above, may be understood from the following descriptions and more clearly understood from the embodiment of the present invention. In addition, it can be easily understood that the objects and advantages of the present invention may be realized by means defined in the claims and a combination thereof.

### [Technical Solution]

In order to achieve the above-mentioned objects, the present invention may be applied to a hybrid driving module disposed between an engine and a transmission in a power system and having a motor (50) configured to provide power to the transmission.

The hybrid driving module may have a housing (10) to which a stator (51) is fixed, and the housing (10) is a component that does not rotate.

The hybrid driving module may include rotary components, i.e., a rotor hub (20) to which a rotor (52) is fixed, the rotor hub (20) being disposed rearward of the housing (10) in an axial direction; a hub ridge (40) disposed between the housing (10) and the rotor hub (20) and connected to the rotor hub (20) at a radial outer side thereof so as to be restricted in rotation.

The hub ridge (40) and the rotor hub (20) may be fixed by a ridge fixing member (49).

The ridge fixing member (49) may be detachably fastened to the rotor hub (20) to restrict a forward movement of the hub ridge (40) relative to the rotor hub (20).

An assembling hole (12) is provided in a portion of the housing (10) that faces a fastening portion between the ridge fixing member (49) and the hub ridge (40) in the axial direction.

In order to connect the component, which does not rotate, and the component, which rotates, the hybrid driving module may have a ridge bearing (47) disposed between the hub ridge (40) and the housing (10) and configured to connect the hub ridge (40) and the housing (10) so that the hub ridge (40) is rotatable relative to the housing (10).

The ridge bearing (47) restricts the hub ridge (40) and the housing (10) in the radial direction and the two axial directions.

Therefore, in order to assemble the hybrid driving module, the housing (10) and the hub ridge (40) are assembled first by means of the ridge bearing (47) so as to be restricted in the radial direction and the axial direction (S01), the radial outer side of the hub ridge (40) is connected to the rotor hub (20) so as to be restricted in rotation (S02), and then in this state, the ridge fixing member (49) is fastened to the rotor hub (20) through the assembling hole (12) (S03), such that the component, which does not rotate, and the component, which rotates, are restricted in the radial direction and the axial direction, and these components may be simply assembled.

The process of disassembling these components may also be simply performed in the reverse order to the assembling process.

One or two or more assembling holes (12) may be provided in the housing (10) in a circumferential direction. However, only one assembling hole (12) may be provided to facilitate the assembling process.

A sealing cap (13) may be detachably installed in the assembling hole (12) and seal the assembling hole (12). That is, after the above-mentioned assembling process ends, the housing (10) may be finished by coupling the sealing cap (13) to the assembling hole (12) (S04). Therefore, it is possible to prevent the fluid in the housing (10) from leaking to the outside of the housing (10).

The rotor hub (20) may have an axial extension portion (24) configured to fix the rotor (52).

The rotor (52) may be disposed at a radial outer side of the axial extension portion (24).

An elastic spacer (28) may be disposed forward or rearward of the rotor (52) and elastically transformed or restored in the axial direction.

When the hub ridge (40) is pressed toward the rotor (52) from a front side of the rotor (52) and the elastic spacer (28), and the elastic spacer (28) may be compressed and transformed in the axial direction. In this state, when the ridge fixing member (49) is fastened to the rotor hub (20), the axial positions of the rotor 52 and the hub ridge (40) with respect to the rotor hub (20) may be more securely fixed.

The ridge fixing member (49) may include a ridge snap ring (49) provided forward of the hub ridge (40) and fitted with a snap groove (242) recessed in the rotor hub (20) in the radial direction.

The snap groove (242) may be provided in an outer peripheral surface or an inner peripheral surface of the axial extension portion (24).

Therefore, the hub ridge (40) may be assembled to the rotor hub (20) in a state in which the hub ridge (40) is assembled in advance to the housing (10) by a simple operation of elastically transforming the ridge snap ring (49) through the assembling hole (12) to increase or decrease a diameter of the ridge snap ring (49), elastically restoring the ridge snap ring (49) again, and fitting the ridge snap ring (49) into the snap groove (242).

An outer diameter of a centrifugal end of the hub ridge (40) may be larger than an inner diameter of the ridge snap ring (49). Then, after the housing 10 and the hub ridge 40 are assembled in advance in the state in which the ridge snap ring 49 is provided between the housing 10 and the hub ridge 40, the ridge snap ring 49 may not separate from the components assembled in advance.

A protrusion portion 411 may be provided at the centrifugal end of the hub ridge 40 and protrude forward. Further, an inner diameter of the protrusion portion 411 may be larger than an outer diameter of the ridge snap ring 49. Then, a state in which a center of the ridge snap ring 49 and a center of the hub ridge 40 are temporarily aligned may be maintained, such that the process of assembling the ridge snap ring 49 through the assembling hole 12 is more easily performed.

A finger portion (241) may be provided forward of the rotor hub (20), extend forward from the rotor hub (20), and be disposed to be spaced apart from the rotor hub (20) in the circumferential direction. A hub coupling portion (41), which is penetrated by the finger portion (241) in the axial direction, may be provided on the hub ridge (40).

Therefore, when the finger portion (241) is fitted with the hub coupling portion (41) by relatively moving the hub ridge (40) rearward from the front side of the rotor hub (20), the rotor hub (20) and the hub ridge (40) may be conveniently aligned in the circumferential direction.

The finger portion (241) may interfere with the hub ridge (40) in the circumferential direction in the state in which the finger portion (241) penetrates the hub coupling portion (41). Therefore, the hub ridge (40) may be restricted in rotation with respect to the rotor hub (20).

The hub coupling portion (41) may have a hole shape penetratively formed in the axial direction or a groove shape penetratively formed in the axial direction and opened in a centrifugal direction.

One of a radial outer side or a radial inner side of the ridge bearing (47) may be supported by the housing (10), and the other of the radial outer side and the radial inner side of the ridge bearing (47) may be supported by the hub ridge (40). Therefore, the housing (10) and the hub ridge (40) may be aligned with each other in the radial direction.

One of a front side or a rear side of one side of the ridge bearing (47) may be supported by the housing (10), and the other of the front side and the rear side of one side of the ridge bearing (47) may be supported by a first bearing snap ring (15) fastened to the housing (10).

One of a front side or a rear side of the other side of the ridge bearing (47) may be supported by the hub ridge (40), and the other of the front side and the rear side of the other side of the ridge bearing (47) may be supported by a second bearing snap ring (422) fastened to the hub ridge (40).

A radial outer side of the ridge bearing (47) may be supported by the hub ridge (40), and a radial inner side of the ridge bearing (47) may be supported by the housing (10). Of course, the opposite arrangement is also possible.

The radial inner side of the ridge bearing (47) may be supported forward by an increased outer diameter shape provided on the housing (10), e.g., an outward stepped projection shape and supported rearward by a first bearing snap ring (15) detachably inserted into a groove provided in an outer peripheral surface of the housing (10). Of course, the opposite arrangement is also possible.

The radial outer side of the ridge bearing (47) may be supported rearward by a decreased inner diameter shape provided on the hub ridge (40), e.g., an inward stepped projection shape and supported forward by a second bearing snap ring (422) detachably inserted into a groove provided in an inner peripheral surface of the hub ridge (40). Of course, the opposite arrangement is also possible.

Therefore, the housing (10) and the hub ridge (40) may be assembled in advance by internally inserting the ridge bearing (47) rearward from the front side of the inner peripheral surface of the hub ridge (40), inserting the second bearing snap ring (422) into the groove formed in the inner peripheral surface of the hub ridge (40) from the front side of the ridge bearing (47), externally inserting the ridge bearing (47) forward from the rear side of the outer peripheral surface of the housing (10), and then inserting the first bearing snap ring (15) into the groove formed in the outer peripheral surface of the housing (10) from the rear side of the ridge bearing (47).

The arrangement of the hub ridge (40), the ridge bearing (47), the housing (10), the first bearing snap ring (15), the second bearing snap ring (422), the inward stepped projection, and the outward stepped projection may be variously modified within a range in which the components may be simply assembled in advance.

The ridge bearing (47) may be a bearing including an outer race, an inner race, and rolling elements disposed between the outer race and the inner race. For example, the bearing may be a ball bearing. Therefore, it may be understood that in the ridge bearing (47), the radial outer side is referred to as an outer peripheral surface of the outer race, the front side and the rear side of the radial outer side are referred to as a front surface and a rear surface of the outer race, the radial inner side is referred to as an inner peripheral surface of the inner race, and the front side and the rear side of the radial inner side are referred to as a front surface and a rear surface of the inner race.

A piston plate (43) may be provided rearward of the hub ridge (40), installed on the hub ridge (40), and configured to be slidable in the axial direction.

An inner peripheral surface of the piston plate (43) may slide on the hub ridge (40). An outer peripheral surface of the piston plate (43) may slide on the hub ridge (40).

Therefore, even in a state in which the piston plate (43) is installed in advance on the hub ridge (40) before the housing (10) and the hub ridge (40) are assembled in advance, this state does not affect the process of assembling the housing (10) and the hub ridge (40) or the process of assembling the hub ridge (40) and the rotor hub (20).

A compensation plate (45) may be installed on the hub ridge (40) and provided rearward of the piston plate (43).

The compensation plate (45) may be installed on the hub ridge (40) so as not to move rearward relative to the hub ridge (40). The piston plate (43) may slide at a radial outer end of the compensation plate 45.

Therefore, even in a state in which the compensation plate (45) is installed in advance on the hub ridge (40) before the housing (10) and the hub ridge (40) are assembled in advance, this state does not affect the process of assembling the housing (10) and the hub ridge (40) and the process of assembling the hub ridge (40) and the rotor hub (20).

An engine clutch (37) configured to selectively transmit power of the engine to the rotor hub (20) may be disposed between the piston plate (43) and the rotor hub (20) in the axial direction. The piston plate (43) may be disposed forward of a first clutch pack (38) of the engine clutch (37).

Therefore, the rotor hub (20) and the hub ridge (40) may be assembled in a state in which the first clutch pack (38) is installed on the rotor hub (20).

The hybrid driving module may further include an input member (30) disposed between the engine and the engine clutch (37) and configured to connect the engine and the engine clutch (37).

The hybrid driving module may further include a hub shaft bearing (22) configured to connect the input member (30) and the rotor hub (20) so that the input member (30) is rotatable relative to the rotor hub (20).

The hub shaft bearing (22) may be disposed between the input member (30) and the rotor hub (20) and directly connect the input member (30) and the rotor hub (20). Because the hub ridge (40) and the rotor hub (20) are integrally assembled, the hub shaft bearing (22) may be connected between the input member (30) and the hub ridge (40) and connect the input member (30) and the rotor hub (20) by means of the hub ridge (40).

The hybrid driving module may further include an input shaft bearing (34) configured to connect the input member (30) and the housing (10) so that the input member (30) is rotatable relative to the housing (10).

The input shaft bearing (34) may be disposed between the input member (30) and the housing (10) and directly connect the input member (30) and the housing (10).

The hub shaft bearing 22 may restrict the input member (30) and the rotor hub (20) in the radial direction. That is, the hub shaft bearing (22) may be interposed between the input member (30) and the rotor hub (20) in the radial direction, and the state in which the input member (30) and the rotor hub (20) are aligned with each other in the radial direction may be maintained. That is, a center of the input member (30) and a center of the rotor hub (20) may be aligned.

The input shaft bearing (34) may restrict the input member (30) and the housing (10) in the radial direction. That is, the input shaft bearing (34) may be interposed between the input member (30) and the housing (10) in the radial direction, and the state in which the input member (30) and the housing (10) are aligned with each other in the radial direction may be maintained. That is, a center of the input member (30) and a center of the housing (10) may be aligned.

Only a first bearing selected from the hub shaft bearing (22) and the input shaft bearing (34) may restrict a forward movement of the input member (30).

That is, when the forward movement of the input member (30) is restricted by the hub shaft bearing (22) and the rotor hub (20), the forward movement of the input member (30) may not be restricted by the input shaft bearing (34) and the housing (10). Alternatively, when the forward movement of the input member (30) is restricted by the input shaft bearing (34) and the housing (10), the forward movement of the input member (30) may not be restricted by the hub shaft bearing (22) and the rotor hub (20).

Only a second bearing selected from the hub shaft bearing (22) and the input shaft bearing (34) may restrict a rearward movement of the input member (30).

That is, when the rearward movement of the input member (30) is restricted by the hub shaft bearing (22) and the rotor hub (20), the rearward movement of the input member (30) may not be restricted by the input shaft bearing (34) and the housing (10). Alternatively, when the rearward movement of the input member (30) is restricted by the input shaft bearing (34) and the housing (10), the rearward movement of the input member (30) may not be restricted by the hub shaft bearing (22) and the rotor hub (20).

The first bearing and the second bearing may be the same bearing.

That is, when both the forward and rearward movements of the input member (30) are restricted by the hub shaft bearing (22) and the rotor hub (20), either the forward or rearward movement of the input member (30) may not be restricted by the input shaft bearing (34) and the housing (10). Alternatively, when both the forward and rearward movements of the input member (30) are restricted by the input shaft bearing (34) and the housing (10), either the forward or rearward movement of the input member (30) may not be restricted by the hub shaft bearing (22) and the rotor hub (20).

The first bearing and the second bearing may be different bearings.

That is, when the forward movement of the input member (30) is allowed and the rearward movement of the input member (30) is restricted by the hub shaft bearing (22) and the rotor hub (20), the forward movement of the input member (30) may be restricted and the rearward movement of the input member (30) may be allowed by the input shaft bearing (34) and the housing (10). Alternatively, when the forward movement of the input member (30) is allowed and the rearward movement of the input member (30) is restricted by the input shaft bearing (34) and the housing (10), the forward movement of the input member (30) may be restricted and the rearward movement of the input member (30) may be allowed by the hub shaft bearing (22) and the rotor hub (20).

Because the ridge bearing (47) restricts the housing (10) and the hub ridge (40) fixed to the rotor hub (20) in the two axial directions, an axial distance between the housing (10) and the rotor hub (20) may be constantly restricted.

Therefore, the axial position of the input member (30) with respect to both the housing (10) and the rotor hub (20) may be constantly restricted as long as the forward movement of the input member (30) relative to any one component selected from the housing (10) and the rotor hub (20) is restricted and the rearward movement of the input member (30) relative to any one selected from the housing (10) and the rotor hub (20) is restricted.

A radial outer side of the input shaft bearing (34) may be supported by the housing (10), and a radial inner side of the input shaft bearing (34) may be supported by the input member (30). Of course, the opposite arrangement is also possible.

The radial inner side of the input shaft bearing (34) may be supported rearward by an increased outer diameter shape provided on the input member (30), e.g., an outward stepped projection shape and supported forward by a snap ring detachably inserted into a groove provided in an outer peripheral surface of the input member (30). Of course, the opposite arrangement is also possible.

The radial outer side of the input shaft bearing (34) may be supported rearward by a decreased inner diameter shape provided on the housing (10), e.g., an inward stepped projection shape and supported forward by a snap ring detachably inserted into a groove provided in an inner peripheral surface of the housing (10). Of course, the opposite arrangement is also possible.

The input shaft bearing (34) may be a bearing including an outer race, an inner race, and rolling elements disposed between the outer race and the inner race. For example, the bearing may be a ball bearing. Therefore, it may be understood that in the input shaft bearing (34), the radial outer side is referred to as an outer peripheral surface of the outer race, the front side and the rear side of the radial outer side are referred to as a front surface and a rear surface of the outer race, the radial inner side is referred to as an inner peripheral surface of the inner race, and the front side and the rear side of the radial inner side are referred to as a front surface and a rear surface of the inner race.

A radial outer side of the hub shaft bearing (22) may be supported by the input member (30), and a radial inner side of the hub shaft bearing (22) may be supported by the rotor hub (20). Of course, the opposite arrangement is also possible.

The hub shaft bearing (22) may not restrict the axial position of the input member (30) with respect to the rotor hub (20).

The hub shaft bearing (22) may be a needle bearing.

The input shaft bearing (34) may be disposed forward of the hub shaft bearing (22).

Then, the hub ridge (40) may be assembled to the rotor hub (20) on which the hub shaft bearing (22) is installed in a state in which the hub ridge (40) is assembled in advance to the housing (10) and the input member (30) is assembled to the housing (10) by means of the input shaft bearing (34). Therefore, the input member (30) may be connected to the hub shaft bearing (22) without being separately fastened in the axial direction.

The arrangement of the input member (30), the input shaft bearing (34), the housing (10), the snap rings, the inward stepped projection, and the outward stepped projection may be variously modified within a range in which the components may be simply assembled in advance.

### [Advantageous Effects]

According to the hybrid driving module of the present invention, an increase in the number of components may be minimized, the assembling and disassembling processes may be facilitated, and the components connected to be relatively rotatable may be securely supported in the axial direction.

According to the present invention, the axial restriction structure between the components may be improved, and the low-cost bearing, which has a function of supporting the rotation only in the radial direction, may be applied, such that it is possible to minimize the application of the high-cost bearing that supports the rotations in both the radial and axial directions.

According to the present invention, the ridge bearing may be designed to restrict the housing and the rotor hub in the axial direction, such that the capacity required for the hub shaft bearing may be reduced, and the hybrid driving module, which is more compact in the axial direction, may be designed.

The specific effects of the present invention, together with the above-mentioned effects, will be described along with the description of specific items for carrying out the present invention.

### [Description of Drawings]

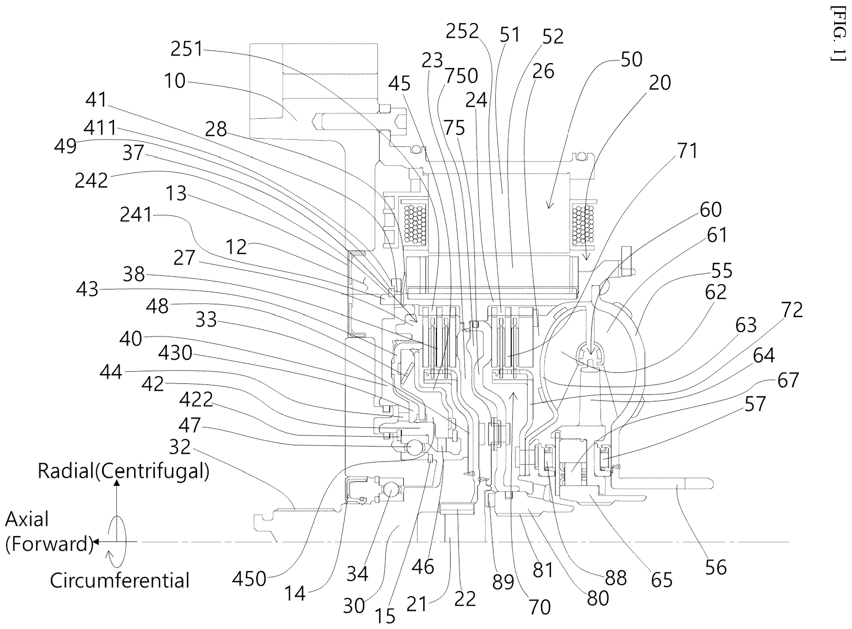

FIG. 1 is a cross-sectional view of an embodiment of a hybrid driving module according to the present invention.

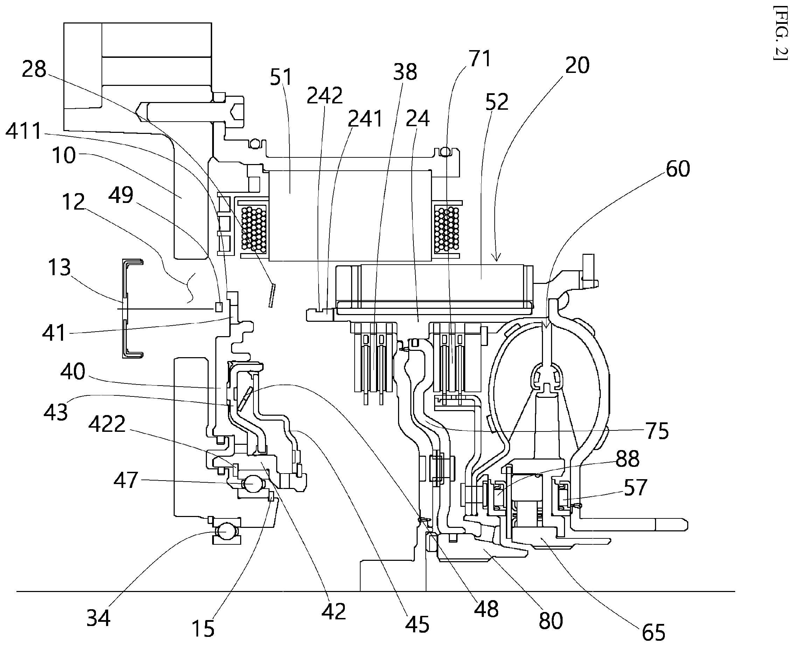

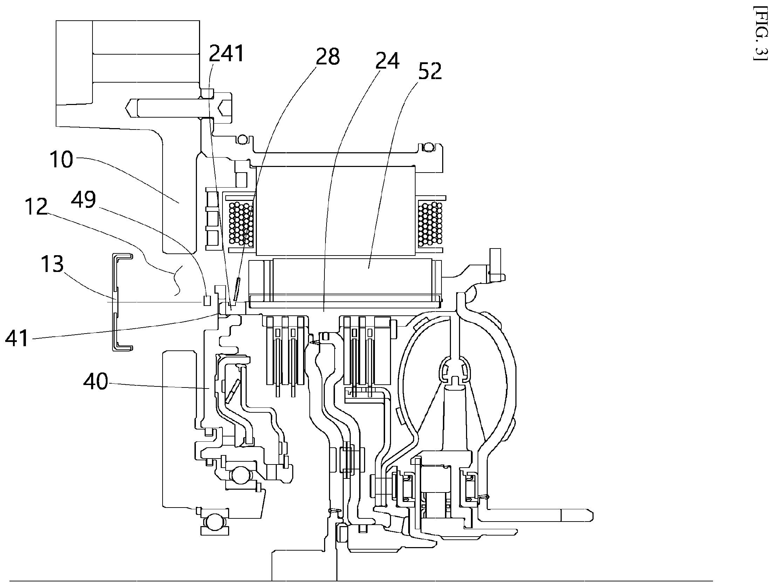

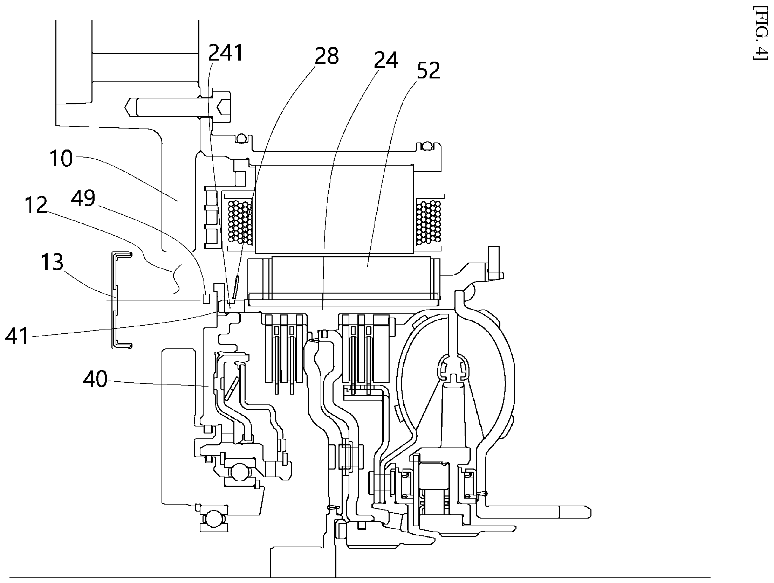

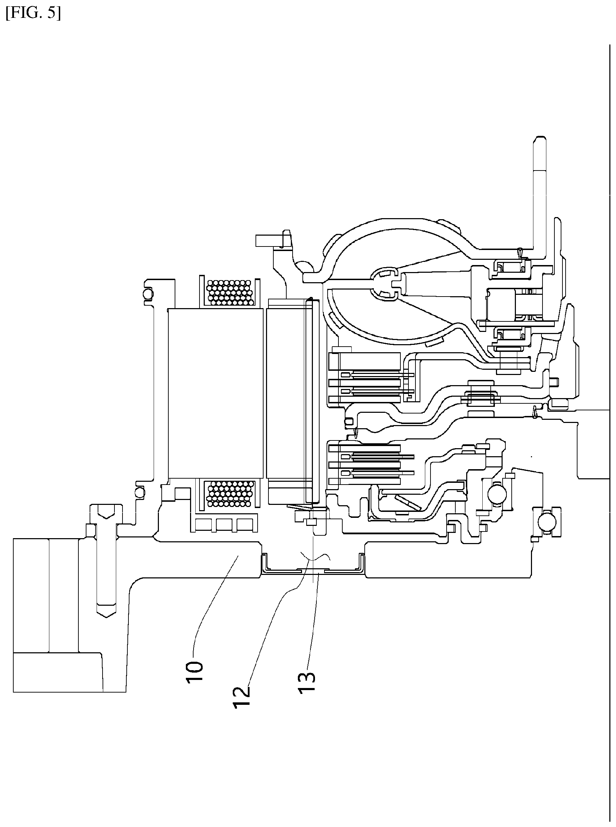

FIGS. 2 to 5 are views sequentially illustrating a step of assembling the hybrid driving module of the embodiment in a state in which an input member is excluded.

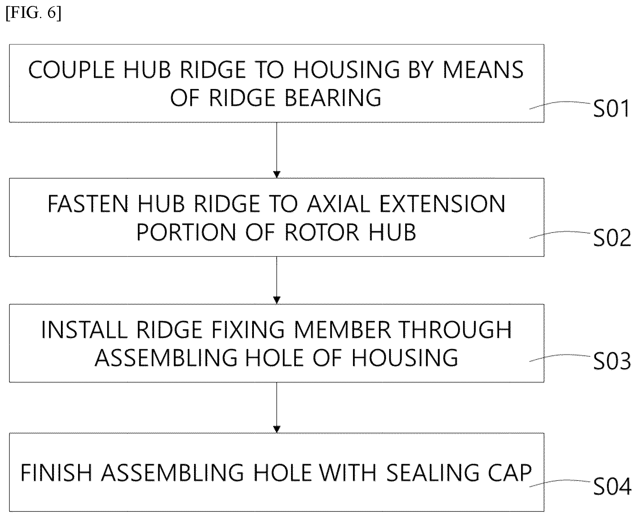

FIG. 6 is a flowchart of the step of assembling the hybrid driving module of the embodiment.

### <Explanation of Reference Numerals and Symbols>

10: Housing, 12: Assembling hole, 13: Sealing cap, 14: Sealing ring, 15: First bearing snap ring, 20: Rotor hub, 21: Hub shaft, 22: Hub shaft bearing 23: Radial extension portion, 24: Axial extension portion, 241: Finger portion, 242: Snap groove, 251: First rotor side carrier, 252: Second rotor side carrier, 26: First accommodation space, 27: Second accommodation space, 28: Elastic spacer, 30: Input member, 33: Input side carrier, 34: Input shaft bearing, 37: Engine clutch, 38: First clutch pack, 40: Hub ridge, 41: Hub coupling portion, 411: Protrusion portion, 42: Piston installation portion, 422: Second bearing snap ring, 43: Piston plate, 430: First operation chamber, 44: Operation hole, 45: Compensation plate, 450: Compensation chamber, 46: Compensation hole, 47: Ridge bearing, 48: Return spring, 49: Ridge fixing member (ridge snap ring), 50: Motor, 51: Stator, 52: Rotor, 55: Back cover, 56: Pump drive hub, 57: Cover bearing, 60: Torque converter, 61: Impeller, 62: Turbine, 63: Turbine plate, 64: Reactor, 65: Fixed end, 67: One-way clutch, 70: Lock-up clutch, 71: Second clutch pack, 72: Output side carrier, 75: Piston member, 750: Second operation chamber, 80: Output member, 81: Output spline, 88: Bearing, 89: Spacer

### [Mode for Invention]

Hereinafter, exemplary embodiments of the present invention will be described in detail with reference to the accompanying drawings.

The present invention is not limited to the embodiments disclosed herein, but will be variously changed and implemented in various different forms. The embodiments are provided so that the present invention will be thorough and complete, and also to provide a more complete understanding of the scope of the present invention to those of ordinary skill in the art. Therefore, it should be understood that the present invention is not limited to the embodiments disclosed below, but the configuration of any one embodiment and the configuration of another embodiment can be substituted or added, and the present invention includes all alterations, equivalents, and alternatives that are included in the technical spirit and scope of the present invention.

It should be interpreted that the accompanying drawings are provided only to allow those skilled in the art to easily understand the exemplary embodiments disclosed in the present specification, and the technical spirit disclosed in the present specification is not limited by the accompanying drawings, and includes all alterations, equivalents, and alternatives that are included in the spirit and the technical scope of the present invention. In the drawings, sizes or thicknesses of constituent elements may be exaggerated, increased, or decreased for convenience of understanding, but the protection scope of the present invention should not be restrictively construed.

The terms used in the present specification are used only for the purpose of describing particular examples or embodiments and are not intended to limit the present invention. Further, singular expressions include plural expressions unless clearly described as different meanings in the context. In the present application, the terms "comprises," "comprising," "includes," "including," "containing," "has," "having", and other variations thereof are intended to specify the presence of features, integers, steps, operations, elements, components, and/or combinations thereof disclosed in the specification. That is, in the present application, it should be understood that the terms "comprises," "comprising," "includes," "including," "containing," "has," "having", and other variations thereof do not preclude the presence or addition of one or more other features, integers, steps, operations, elements, components, and/or combinations thereof.

The terms including ordinal numbers such as "first," "second," and the like may be used to describe various constituent elements, but the constituent elements are not limited by the terms. These terms are used only to distinguish one constituent element from another constituent element.

When one constituent element is described as being "coupled" or "connected" to another constituent element, it should be understood that one constituent element can be coupled or connected directly to another constituent element, and an intervening constituent element can also be present between the constituent elements. When one constituent element is described as being "coupled directly to" or "connected directly to" another constituent element, it should be understood that no intervening constituent element is present between the constituent elements.

When one constituent element is described as being "disposed above" or "disposed below" another constituent element, it should be understood that one constituent element can be disposed directly on another constituent element, and an intervening constituent element can also be present between the constituent elements.

Unless otherwise defined, all terms used herein, including technical or scientific terms, have the same meaning as commonly understood by those skilled in the art to which the present invention pertains. The terms such as those defined in a commonly used dictionary should be interpreted as having meanings consistent with meanings in the context of related technologies and should not be interpreted as ideal or excessively formal meanings unless explicitly defined in the present application.

Because a hybrid driving module according to an embodiment is symmetrical with respect to an axis, only a half of the hybrid driving module based on the axis is illustrated for the convenience of illustration. In addition, for the convenience of description, a direction along a longitudinal direction of an axis defining a center of a rotation of the hybrid driving module is defined as an axial direction. That is, a forward/rearward direction or an axial direction is defined as a direction parallel to a rotation axis. A front (forward) means any one direction of a power source, e.g., a direction toward an engine. A rear (rearward) means the other direction, e.g., a direction toward a transmission. Therefore, a front surface means a surface facing forward, and a rear surface means a surface facing rearward.

A radial direction means a direction toward or away from a center of the rotation axis along a straight line passing through the center of the rotation axis on the plane perpendicular to the rotation axis. A direction radially away from the center is referred to as a centrifugal direction, and a direction toward the center is referred to as a centripetal direction.

A peripheral direction or a circumferential direction means a direction surrounding a periphery of the rotation axis. An outer periphery means an outer circumference, and an inner periphery means an inner circumference. Therefore, an outer peripheral surface is a surface facing away from the rotation axis, and an inner peripheral surface is a surface facing the rotation axis.

A circumferential surface means a surface, a normal line of which is directed in a circumferential direction.

### [Overall Structure of Hybrid Driving Module]

A hybrid driving module of the present invention is disposed between an engine and a transmission of a power system. Based on the drawings in the embodiment, the engine is disposed at the left side, and the transmission is disposed at the right side.

The hybrid driving module includes a motor 50 configured to provide power to the transmission. The motor 50 includes a stator 51 and a rotor 52.

The stator 51 is fixed to a housing 10 of the hybrid driving module. Further, the rotor 52 is disposed radially inward of the stator 51 and accommodated in the housing 10. The rotor 52 may be fixed to a rotor hub 20 disposed in the housing 10.

An input member 30 is provided at a front center of the housing 10 and connected to an engine to receive power of the engine. The input member 30 is supported to be rotatable relative to the housing 10 by means of an input shaft bearing 34.

The input member 30 further protrudes forward than the housing 10, and an input spline 32 is formed on an outer peripheral surface of the protruding portion. A torsional damper (not illustrated) is connected to the input spline 32. An input side of the torsional damper is connected to the engine, and an output side of the torsional damper is connected to the input member 30.

A sealing ring 14 is disposed forward of the input shaft bearing 34 and interposed between an inner peripheral surface of the housing 10 and an outer peripheral surface of the input member 30. That is, a space, which is filled with a fluid supplied from the transmission, is disposed rearward of the sealing ring 14, and the sealing ring 14 and the housing 10 define a boundary of the space filled with the fluid. That is, the torsional damper may be a dry spring damper.

The rotor hub 20 may include an axial extension portion 24 configured to fix the rotor 52, and a radial extension portion 23 extending radially inward from the axial extension portion 24. The axial extension portion 24 may have a shape similar to a cylinder extending in the axial direction.

The radial extension portion 23 is connected to an approximately central portion in the axial direction of the axial extension portion 24.

A hub shaft 21, which extends in the axial direction, is provided at a radial inner end of the radial extension portion 23. The hub shaft 21 is disposed rearward of the input member 30 in the axial direction. A partial section in the axial direction of the hub shaft 21 overlaps the input member 30. A hub shaft bearing 22 is interposed in a section in which the input member 30 and the hub shaft 21 overlap each other. The hub shaft bearing 22 supports the input member 30 and the hub shaft 21 so that the input member 30 and the hub shaft 21 rotate relative to each other.

A hub ridge 40 is connected to a front end of the axial extension portion 24. The hub ridge 40 is fitted with the axial extension portion 24 in a way that the hub ridge 40 is accommodated in a radial internal space of the axial extension portion 24 from a location disposed forward of the axial extension portion 24. In this case, a hub coupling portion 41 provided at a radial outer end of the hub ridge 40 may engage with the axial extension portion 24 to restrict a rotation.

Specifically, the hub coupling portion 41 may be provided in the form of a hole penetratively formed in the forward/rearward direction. Alternatively, the hub coupling portion 41 may be provided in the form of a groove recessed radially inward from an outer periphery of the hub ridge 40, i.e., provided in a shape opened in the forward/rearward direction and opened in a centrifugal direction. The hub coupling portion 41 may be provided as a plurality of hub coupling portions 41 disposed at equal intervals in a circumferential direction of the hub ridge 40.

The rotor hub 20 has a finger portion 241 further extending forward from the axial extension portion 24. The finger portion 241 may be provided as a plurality of finger portions 241 disposed at equal intervals in the circumferential direction of the rotor hub 20.

An included angle between the two finger portions 241 adjacent to each other in the circumferential direction may correspond to an included angle of the two hub coupling portions 41 adjacent to each other in the circumferential direction. In addition, a radial distance from a rotation center to the finger portion 241 may correspond to a radial distance from the rotation center to the hub coupling portion 41.

Then, the rotor hub 20 and the hub ridge 40 may be fastened to each other in the axial direction in a state in which a circumferential position of the hub ridge 40 relative to the rotor hub 20 is adjusted to an exact position.

Next, a ridge fixing member 49 is fastened to the axial extension portion 24 and disposed forward of the hub ridge 40. In the embodiment, the ridge fixing member 49 may be a ridge snap ring 49, and a snap groove 242, with which the ridge snap ring 49 is fitted, may be provided in the finger portion 241 of the axial extension portion 24. However, the ridge fixing member 49 does not necessarily need to have the snap ring-groove configuration. Other fastening elements, e.g., bolts and the like may be applied as long as the fastening element has a structure capable of fixing the hub ridge 40 to the axial extension portion 24.

The snap groove 242 may be provided in an inner peripheral surface or an outer peripheral surface of the finger portion 241. The embodiment discloses a structure in which the snap groove 242 is provided in the outer peripheral surface of the finger portion 241.

The ridge snap ring 49 inserted into the snap groove 242 prevents the hub ridge 40 from separating from the axial extension portion 24.

An elastic spacer 28 is interposed forward or rearward of the rotor 52 to absorb manufacturing tolerances and assembling tolerances of the components. Therefore, when the ridge snap ring 49 is fastened to a front side of the hub ridge 40 in a state in which the hub ridge 40 is strongly pushed rearward and the elastic spacer 28 is elastically compressed in the axial direction, a clearance of the rotor 52 with respect to the rotor hub 20 and a clearance of the hub ridge 40 with respect to the rotor hub 20 may be absorbed, thereby preventing vibration. The embodiment discloses a structure in which the elastic spacer 28 is interposed between the rotor 52 and the hub ridge 40.

A piston installation portion 42, which extends rearward, is provided at the radial inner end of the hub ridge 40, and a radial inner end of the housing 10 also extends rearward at a side positioned radially inward of the hub ridge 40. Further, a ridge bearing 47 is interposed between these components. That is, the hub ridge 40 is rotatably supported on the housing 10.

Therefore, the rotor hub 20 is rotatably supported on the housing 10 by means of the hub ridge 40 and the ridge bearing 47 and rotatably supported on the housing 10 by means of the hub shaft bearing 22, the input member 30, and the input shaft bearing 34.

Because a position of the ridge bearing 47 and a position of the hub shaft bearing 22 are spaced apart from each other in the axial direction, a central axis of the rotor hub 20 with respect to a central axis of the housing 10 may be accurately aligned without being inclined.

The radial internal space of the axial extension portion 24 of the rotor hub 20 defines a space filled with a fluid such as transmission oil. The space may be divided into a first accommodation space 26 and a second accommodation space 27 by the radial extension portion 23. The first accommodation space 26 may be defined as a space between the radial extension portion 23 and a back cover 55, which will be described below, in the axial direction. The second accommodation space 27 may be defined as a space between the hub ridge 40 and the radial extension portion 23 in the axial direction. The second accommodation space 27 provided forward of the radial extension portion 23 is disposed forward of the first accommodation space 26.

The input member 30 is disposed in the second accommodation space 27. The input member 30 and the rotor hub 20 are connected through an engine clutch 37. The engine clutch 37 is also disposed in the second accommodation space 27. The engine clutch 37 has a first clutch pack 38 in which a plurality of friction plates are disposed in the axial direction.

A radial outer side of the first clutch pack 38 is fixed to a second rotor side carrier 252 provided on an inner peripheral surface of the axial extension portion 24 of the rotor hub 20, and a radial inner side of the first clutch pack 38 is fixed to an input side carrier 33 extending radially outward from a rear end of the input member 30.

A piston plate 43 is disposed forward of the first clutch pack 38. The piston plate 43 is disposed between the hub ridge 40 and the first clutch pack 38 in the axial direction. An outer peripheral surface of the piston plate 43 slidably adjoins the hub ridge 40, and an inner peripheral surface of the piston plate 43 slidably adjoins the piston installation portion 42 of the hub ridge 40. A space between the piston plate 43 and the hub ridge 40 defines a first operation chamber 430.

The hub ridge 40 has an operation hole 44 connected to communicate with the first operation chamber 430.

A compensation plate 45 is disposed forward of the engine clutch 37 and rearward of the piston plate 43. A radial inner end of the compensation plate 45 is supported on the piston installation portion 42 of the hub ridge 40. A rearward movement of the compensation plate 45 is restricted by a snap ring installed on an outer peripheral surface of the piston installation portion 42.

An outer peripheral surface of the compensation plate 45 adjoins the piston plate 43. That is, the piston plate 43 slidably adjoins the compensation plate 45.

A space between the piston plate 43 and the compensation plate 45 defines a compensation chamber 450. A return spring 48 is accommodated in the compensation chamber 450. The return spring 48 is interposed between the piston plate 43 and the compensation plate 45 and elastically presses the piston plate 43 in a direction away from the compensation plate 45. That is, the return spring 48 applies an elastic force to the piston plate 43 in a direction in which the piston plate 43 presses or releases the first clutch pack 38.

A radial inner side boundary of the compensation chamber 450 may be defined by the piston installation portion 42. The piston installation portion 42 of the hub ridge 40 has a compensation hole 46 connected to communicate with the compensation chamber 450.

Although not illustrated, the housing 10 has a first flow path that communicates with the operation hole 44. The fluid to be supplied to the first operation chamber 430 is supplied to the first operation chamber 430 through the first flow path and the operation hole 44. Therefore, the engine clutch 37 operates, power of the engine is transmitted to the rotor hub 20 through the input member 30 and the first clutch pack 38.

Although not illustrated, the housing 10 has a second flow path that communicates with the second accommodation space 27. In the housing 10, the first flow path and the second flow path do not communicate with each other. That is, a supply of the fluid through the first flow path and a supply of the fluid through the second flow path may be performed independently.

The compensation hole 46 communicates with the second accommodation space 27. Therefore, the fluid to be supplied to the compensation chamber 450 is supplied to the compensation chamber 450 through the second flow path 11, the second accommodation space 27, and the compensation hole 46.

In the second accommodation space 27, the input shaft bearing 34, the ridge bearing 47, and the hub shaft bearing 22 are disposed, and the first clutch pack 38 is also disposed. A flow path hole may be formed in the input member 30 so that the fluid, which is stored in the second accommodation space 27, smoothly flows through the second flow path. Therefore, the fluid supplied through the second flow path fills the second accommodation space 27 and lubricates and cools the bearings, the first clutch pack 38, and the rotor 52.

When the pressure of the fluid supplied through the first flow path overcomes the pressure of the fluid supplied through the second flow path and the elastic force of the return spring 48, the piston plate 43 presses the first clutch pack 38. Otherwise, the piston plate 43 releases the first clutch pack 38.

The piston plate 43 and the compensation plate 45 rotate together with the hub ridge 40, and the hub ridge 40 is connected to the rotor hub 20 so that the rotation of the hub ridge 40 is restricted. Therefore, the piston plate 43 and the compensation plate 45 rotate together with the rotor hub 20.

The back cover 55 is connected to a rear end of the axial extension portion 24 and defines a rear boundary of the first accommodation space 26. The back cover 55 is integrally fixed to the rear end of the axial extension portion 24 by means of welding or a fastening means such as a bolt. The embodiment discloses a structure in which the back cover 55 is integrated with the rotor hub 20 by welding.

The first accommodation space 26 of the rotor hub 20 may accommodate an output member 80 and a power transmission part configured to transmit a rotational force of the rotor hub 20 to the output member 80.

The power transmission part may include a fluid clutch connected to the rotor hub 20, and a second clutch pack 71 connected to the rotor hub 20.

The fluid clutch may be a torque converter 60. That is, the fluid clutch may include an impeller 61 and a turbine 62 facing each other and having a half torus shape, and a reactor 64 disposed between the impeller 61 and the turbine 62 and connected to a fixed end 65 through a one-way clutch 67.

The impeller 61 may be provided on the back cover 55. Therefore, the rotation of the impeller 61 relative to the rotor hub 20 is restricted.

A pump drive hub 56 is provided at a radial inner side of the back cover 55 and extends rearward.

The fixed end 65 may be disposed forward and radially inward of the pump drive hub 56, and a cover bearing 57 may be interposed between the fixed end 65 and the pump drive hub 56. The cover bearing 57 may be a thrust bearing.

The output member 80 may be disposed forward and radially inward of the fixed end 65, and a bearing 88 may be interposed between the output member 80 and the fixed end 65. The bearing 88 may be a thrust bearing.

When the rotor hub 20 rotates, a rotational force of the rotor hub 20 operates a pump by means of the back cover 55 and the pump drive hub 56. Therefore, the transmission oil is supplied to the first accommodation space 26 through a space between the output member 80 and the fixed end 65. Therefore, the first accommodation space 26 is filled with the fluid for operating the fluid clutch, cooling the second clutch pack 71, and lubricating the bearings. As described above, the oil introduced into the first accommodation space 26 may be discharged to the transmission through the space between the fixed end 65 and the back cover 55. During the process of circulating the fluid, the second clutch pack 71, the one-way clutch 67, the cover bearing 57, and the bearing 88 may be lubricated and cooled.

The turbine 62 is disposed forward of the impeller 61 while facing the impeller 61, and a radial inner side of a turbine plate 63, on which the turbine 62 is installed, is connected to the output member 80. The output member 80 is connected to an input side of the transmission.

The reactor 64 is disposed between the impeller 61 and the turbine 62. The reactor 64 is installed at the fixed end 65 by means of the one-way clutch 67. The reactor 64 rotates relative to the back cover 55 and rotates relative to the output member 80. The cover bearing 57 is interposed between the reactor 64 and the back cover 55 and the bearing 88 is interposed between the reactor 64 and the output member 80 in order to allow and support the relative rotation between the back cover 55 and the reactor 64 and the relative rotation between the output member 80 and the reactor 64. That is, the output member 80 and the back cover 55 are rotatably supported on the fixed end 65.

In a state in which the rotor hub 20 and the output member 80 are different in rotational velocity, the rotational force of the motor and/or the engine may be transmitted to the output member 80 through the torque converter 60.

A lock-up clutch 70 is disposed forward of the turbine plate 63 in the first accommodation space 26. The lock-up clutch 70 has the second clutch pack 71 in which a plurality of friction plates are disposed in the axial direction.

The second clutch pack 71 is disposed between the rotor hub 20 and the output member 80 and connects or disconnects the rotor hub 20 and the output member 80.

The plurality of second clutch packs 71 are disposed such that the friction plates, which are connected to a first rotor side carrier 251 provided on an inner peripheral surface of the axial extension portion 24 of the rotor hub 20 at a radial outer side thereof, and the friction plates, which are connected to the output member 80 through an output side carrier 72 at a radial inner side thereof, are alternately disposed in the axial direction.

The first rotor side carrier 251 may be disposed radially outward of the output side carrier 72. That is, the output side carrier 72 may be disposed radially inward of the first rotor side carrier 251.

The embodiment discloses a structure in which the first rotor side carrier 251 is integrated with the inner peripheral surface of the axial extension portion 24. However, the first rotor side carrier 251 may be a structure manufactured as a separate component and then coupled to the rotor hub 20.

A radial inner side of the second clutch pack 71 may be connected to the output side carrier 72, and the output side carrier 72 may be connected to the output member 80 in a way that the output side carrier 72 in a way that the output side carrier 72 is fixed to the output member 80.

A piston member 75 configured to press or release the second clutch pack 71 is installed in the first accommodation space 26.

The piston member 75 has a shape extending in the radial direction and has a first surface (rear surface) directed toward one side in the axial direction, and a second surface (front surface) directed toward a side opposite to one side. That is, the first surface and the second surface are opposite to (face away from) each other.

The piston member 75 is disposed rearward of the radial extension portion 23 and disposed forward of the lock-up clutch 70. Therefore, the first surface is disposed to face the second clutch pack 71 and the torque converter. Further, the second surface is disposed to face the radial extension portion 23.

A radial inner end of the piston member 75 slidably adjoins an outer peripheral surface of the output member 80. The radial outer end of the piston member 75 slidably adjoins the inner peripheral surface of the axial extension portion 24.

The radial extension portion 23 and the piston member 75 define a second operation chamber 750 for the piston member 75. The second surface of the piston member 75 faces the second operation chamber 750.

The output member 80 has a hollow shaft shape. Further, an output spline 81 is formed on an inner peripheral surface of the hollow shaft shape and connected to the input side of the transmission. The hollow portion of the output member 80 defines a flow path through which the fluid is supplied to the second operation chamber 750. A spacer 89 is interposed between the output member 80 and the radial extension portion 23, maintains an interval between the output member 80 and the radial extension portion 23, and allows the fluid to flow. The flow path communicates with the second operation chamber 750 through a space between the output member 80 and the radial extension portion 23. Therefore, the transmission oil supplied through the flow path may be introduced into the second operation chamber 750. When the pressure in the second operation chamber 750 becomes higher than the pressure in the first accommodation space 26, the piston member 75 may be retracted, the lock-up clutch 70 may be operated, and the rotational force of the rotor hub 20 may be transmitted to the output member 80 through the lock-up clutch 70. When the pressure in the second operation chamber 750 becomes lower than the pressure in the first accommodation space 26, the piston member 75 is advanced, and the lock-up clutch 70 is disengaged.

The rotor hub 20 and the back cover 55 are coupled integrally. Therefore, an axial distance between the radial extension portion 23 and the back cover 55 is maintained constantly.

The output member 80 is supported forward by the spacer 89 and the radial extension portion 23. The output member 80 is supported rearward by the bearing 88 and the fixed end 65. In this case, the bearing 88 may be a thrust bearing. A central axis of the output member 80 is aligned with the rotor hub 20 by means of the piston member 75.

The fixed end 65 is supported forward by the bearing 88 and the output member 80. The fixed end 65 is supported rearward by the cover bearing 57 and the back cover 55. In this case, the cover bearing 57 may be a thrust bearing.

Therefore, axial positions of the fixed end 65 and the output member 80 of the first accommodation space 26 are restricted by the rotor hub 20 and the back cover 55.

All the rotor 52, the rotor hub 20, the torque converter 60 disposed in the first accommodation space 26, the fixed end 65, the output member 80, the lock-up clutch 70, the piston member 75, and the first clutch pack 38 disposed in the second accommodation space 27 are rotary components and are restricted in the axial direction to maintain the axial positions therebetween.

In contrast, the housing 10 and the stator 51, which is installed in the housing 10, are components fixed without rotating.

The embodiment discloses a structure in which the rotor hub 20 and the hub ridge 40 are integrated while being restricted in the two axial directions, the radial direction, and the circumferential direction, the hub ridge 40 and the housing 10 are rotatably connected while being restricted in the two axial directions and the radial direction, the input member 30 and the input side carrier 33 are rotatably connected in the two axial directions and the radial direction with respect to the housing 10, and the input member 30 is rotatably connected while being restricted in the radial direction with respect to the rotor hub 20.

Hereinafter, the above-mentioned structure and a method of assembling the hybrid driving module having the above-mentioned structure will be described below in detail.

### [Structure for Assembling Housing, Hub ridge, and Rotor hub]

The embodiment provides the hybrid driving module having the structure assembled in a way that the hub ridge 40 is fixed to the rotor hub 20 in a state in which the housing 10, the hub ridge 40, and the input member 30 are assembled in advance in order to improve assembling convenience.

The stator 51 may be fixed to the housing 10 before the hub ridge 40 is fixed to the rotor hub 20.

The hub ridge 40 may be connected to the housing 10 first before the hub ridge 40 is fixed to the rotor hub 20.

The piston plate 43, the return spring 48, and the compensation plate 45 may be installed on the hub ridge 40, and the assembling process, i.e., the process of assembling the hub ridge assembly may be performed before the hub ridge 40 is connected to the housing 10. Of course, the hub ridge assembly may be assembled after the hub ridge 40 is connected to the housing 10.

The hub ridge 40 is connected to the housing 10 in a state in which the ridge bearing 47 is interposed therebetween.

The space defined by an inner periphery of the piston installation portion 42 of the hub ridge 40 is opened forward. In addition, the inner periphery of the piston installation portion 42 has a stepped projection formed inward from the rear side, such that there is a portion having an inner diameter that decreases.

The housing 10 extends radially inward and rearward from the hub ridge 40. An outward stepped projection having an increased outer diameter is provided forward of an outer peripheral surface of the extension portion.

First, an outer race of the ridge bearing 47 adjoins the inner periphery of the piston installation portion 42 of the hub ridge 40 from a front side of the hub ridge 40, and a rear surface of the outer race is internally inserted into the ridge bearing 47 until the rear surface of the outer race adjoins the inward stepped projection of the piston installation portion 42. Further, a snap ring is fitted with the inner periphery of the piston installation portion 42 from a front side of the outer race, such that the outer race of the ridge bearing 47 is restricted in the forward/rearward direction.

In the state in which the ridge bearing 47 is restricted by the hub ridge 40 as described above, an inner race of the ridge bearing 47 adjoins an outer peripheral surface of the extension portion of the housing 10 from the rear side of the housing 10, and a front surface of the inner race is externally inserted into the ridge bearing 47 until the front surface of the inner race adjoins the outward stepped projection of the extension portion. Further, a snap ring is fitted with an outer periphery of the extension portion from a rear side of the inner race, such that the inner race of the ridge bearing 47 is restricted in the forward/rearward direction.

In the state in which the hub ridge 40 is assembled to the housing 10 by means of the ridge bearing 47 as described above, the hub ridge 40 is fixed to the axial extension portion 24 of the rotor hub 20. In this case, an assembling hole 12 is provided in a portion of the housing 10, which faces the fastening portion between the ridge fixing member 49 and the hub ridge 40 in the axial direction, to allow access to the fastening portion between the hub ridge 40 and the axial extension portion 24 of the rotor hub 20 from the front side of the housing 10. A sealing cap 13 may be detachably inserted into the assembling hole 12 and isolate the internal space and the external space of the housing 10.

The embodiment discloses that the assembling hole 12 is circular. However, the assembling hole 12 may have various shapes. However, the assembling hole 12 and the sealing cap 13 may be circular in consideration of a sealing structure of the sealing cap 13.

One or two or more assembling holes 12 may be provided in the circumferential direction. When several assembling holes 12 are provided, the ridge fixing member 49 may be conveniently handled through the assembling holes 12. However, because the sealing cap 13 needs to be fitted for each of the assembling holes 12, which increases the number of components. The embodiment proposes a housing structure having one assembling hole 12. When the ridge snap ring 49 is used as a ridge fixing member, there is no inconvenience in handling the ridge fixing member even though one assembling hole 12 is provided.

The assembling hole 12 is disposed forward of the axial extension portion 24 of the rotor hub 20. Therefore, an operator may hold the ridge snap ring 49 with a jig through the assembling hole 12 from the front side of the housing 10 and fix the ridge snap ring 49 to the rotor hub 20. In this case, the rotor hub 20 may be in a state of a rotor hub assembly in which the rotor 52, the first clutch pack 38, the lock-up clutch 70, the piston member 75, the output member 80, the torque converter 60, the fixed end 65, and the back cover 55 are assembled in advance.

The ridge snap ring 49 needs to be disposed forward of the hub ridge 40. However, a diameter of the ridge snap ring 49 is smaller than a diameter of the hub ridge 40. Therefore, the hub ridge 40 may be assembled to the housing 10 in a state in which the ridge snap ring 49 is disposed between the housing 10 and the hub ridge 40 before the hub ridge 40 is assembled to the housing 10.

When the hub ridge 40 and the housing 10 are assembled in the state in which the ridge snap ring 49 is arranged in advance between the hub ridge 40 and the housing 10, the ridge snap ring 49 is in a state in which the ridge snap ring 49 is not fixed. For this reason, there may be inconvenience when the ridge snap ring 49 is handled later through the assembling hole 12.

In order to eliminate the inconvenience, an outer diameter of a centrifugal end of the hub ridge 40 may be larger than an inner diameter of the ridge snap ring 49. Then, after the housing 10 and the hub ridge 40 are assembled in advance in the state in which the ridge snap ring 49 is provided between the housing 10 and the hub ridge 40, the ridge snap ring 49 may not separate rearward from the components assembled in advance. That is, this restricts an axial position of the ridge snap ring 49 to some extent.

A protrusion portion 411 may be provided at the centrifugal end of the hub ridge 40 and protrude forward. Further, an inner diameter of the protrusion portion 411 may be larger than an outer diameter of the ridge snap ring 49. Then, a state in which a center of the ridge snap ring 49 and a center of the hub ridge 40 are temporarily aligned may be maintained, the process of assembling the ridge snap ring 49 through the assembling hole 12 may be more easily performed. That is, this restricts a radial position of the ridge snap ring 49 to some extent.

The hybrid driving module may further include the input member 30 disposed between the engine and the engine clutch 37 and configured to connect the engine and the engine clutch 37. The input member 30 is a component configured to be rotatable relative to the housing 10 and rotatable relative to the rotor hub 20.

Therefore, the hub shaft bearing 22 is interposed between an outer peripheral surface of the hub shaft 21 of the rotor hub 20 and an inner peripheral surface of the input member 30, which faces the outer peripheral surface of the hub shaft 21 of the rotor hub 20, so that the input member 30 is rotatable relative to the rotor hub 20. In addition, the input shaft bearing 34 is interposed between the inner peripheral surface of the housing 10 and the outer peripheral surface of the input member 30, which faces the inner peripheral surface of the housing 10, so that the input member 30 is rotatable relative to the housing 10.

The central axis of the housing 10 and the central axis of the rotor hub 20 are accurately aligned, and the input shaft bearing 34 and the hub shaft bearing 22 are disposed to be spaced apart from each other in the axial direction, such that the central axis of the input member 30 may also be accurately aligned with the housing 10 and the rotor hub 20.

When hydraulic pressure is supplied to the first operation chamber 430 through the housing 10, the piston plate 43 pushes the first clutch pack 38 rearward. Therefore, the rotor hub 20 receives a rearward force, i.e., a direction away from the hub ridge 40. However, because the rotor hub 20 is fixed to the hub ridge 40, the hub ridge 40 also receives a rearward force. In this case, the second bearing snap ring 422 pushes the outer race of the ridge bearing 47 rearward, and the rear surface of the inner race of the ridge bearing 47 is supported by a first bearing snap ring 15, such that the hub ridge 40 may be supported in the axial direction by the housing 10. That is, with the ridge bearing 47, the rotor hub assembly is supported to be rotatable relative to the housing 10, and the housing 10 suppresses a rearward movement of the rotor hub assembly.

The ridge bearing 47 also suppresses a forward movement of the rotor hub assembly. When the rotor hub assembly receives a forward force toward the housing 10, the inward stepped projection of the piston installation portion 42 of the hub ridge 40 pushes the outer race of the ridge bearing 47 forward, and the outward stepped projection of the housing 10 disposed forward of the inner race of the ridge bearing 47 interferes with the inner race, thereby suppressing a forward movement of the inner race.

Because the input member 30 rotates relative to the housing 10 and rotates relative to the rotor hub 20 and the hub ridge 40, the axial position of the input member 30 with respect to the housing 10, the rotor hub 20, and the hub ridge 40 also needs to be restricted.

Only any one of the hub shaft bearing 22 or the input shaft bearing 34 restricts both the forward and rearward axial movements of the input member 30, or any one of the hub shaft bearing 22 or the input shaft bearing 34 restricts the forward movement of the input member 30 and the other of the hub shaft bearing 22 and the input shaft bearing 34 restricts the rearward movement of the input member 30, such that the axial position of the input member 30 with respect to both the housing 10 and the rotor hub 20 may be restricted.

When the design is implemented such that the input shaft bearing 34 restricts the forward movement of the input member 30 and the hub shaft bearing 22 restricts the rearward movement of the input member 30, the assembling process may exclude the snap ring, such that the assembling process may be further facilitated. However, both the input shaft bearing 34 and the hub shaft bearing 22 need to be configured as bearings that may not only support the rotation in the radial direction but also support the rotation in the axial direction, like a ball bearing.

In contrast, when any one of the input shaft bearing 34 or the hub shaft bearing 22 restricts both the forward and rearward movements of the input member 30, the other of the input shaft bearing 34 and the hub shaft bearing 22 may have only the function of supporting the rotation in the radial direction.

In order for the hub shaft bearing 22 to restrict the axial position between the input member 30 and the rotor hub 20, the snap rings for supporting the inner race and the outer race of the hub shaft bearing 22 in the axial direction need to be installed separately. However, it is not easy to perform a process of installing the snap ring in the state in which the input member 30 is fitted with the rotor hub 20, and a disassembling process is more difficult.

Therefore, the embodiment discloses a configuration in which the input shaft bearing 34 restricts both the forward and rearward axial movements of the input member 30. Specifically, the embodiment discloses a structure in which the input shaft bearing 34 is a ball bearing having outer and inner races restricted in the forward/rearward direction, and the hub shaft bearing 22 is a needle bearing that provides a rotation support surface only in the radial direction.

The inner peripheral surface of the housing 10 has an inward stepped projection so that an inner diameter of the front side is larger than an inner diameter of the rear side. Further, the outer peripheral surface of the input member 30, which faces the inner peripheral surface of the housing 10 in the radial direction, has an outward stepped projection so that an outer diameter of the rear side is larger than an outer diameter of the front side.

Meanwhile, the input side carrier 33, which is enlarged in the radial direction, is integrally connected to the rear end of the input member 30. That is, the input member 30 is configured to be inserted forward from the rear side of the housing 10.

Further, the outer race of the input shaft bearing 34 adjoins the inner peripheral surface of the housing 10, a rear surface of the outer race is inserted to adjoin a front surface of the inward stepped projection, the inner race of the input shaft bearing 34 adjoins the outer peripheral surface of the input member 30, and a rear surface of the inner race is inserted to adjoin a front surface of the outward stepped projection.

As described above, in the state in which the input shaft bearing 34 is inserted, the snap ring is installed on the inner peripheral surface of the housing 10 and provided forward of the outer race of the input shaft bearing 34, and the snap ring is installed on the outer peripheral surface of the input member 30 and provided forward of the inner race, such that the center of the input member 30 is aligned with the housing 10, the axial position of the input member 30 is restricted, and the input member 30 is rotatably installed.

During the assembling process, after the input member 30 is assembled in advance to the hub shaft 21 by means of the hub shaft bearing 22, the input member 30 may be assembled by means of the housing 10 and the input shaft bearing 34 during the process of assembling the hub ridge 40 to the rotor hub 20.

Alternatively, on the contrary, after the input member 30 is assembled in advance to the housing 10, to which the hub ridge 40 is assembled in advance, by means of the input shaft bearing 34, the input member 30 may be connected to the hub shaft 21 by means of the hub shaft bearing 22 during the process of connecting the hub ridge 40 to the rotor hub 20.

In the state in which the input shaft bearing 34 is installed between the input member 30 and the housing 10, the sealing ring 14 may be inserted into the front side thereof. The sealing ring 14 seals the portion between the inner peripheral surface of the housing 10 and the outer peripheral surface of the input member 30.

Meanwhile, only any one of the hub shaft bearing 22 or the input shaft bearing 34 restricts both the forward and rearward axial movements of the input member 30, or any one of the hub shaft bearing 22 or the input shaft bearing 34 restricts the forward movement of the input member 30 and the other of the hub shaft bearing 22 and the input shaft bearing 34 restricts the rearward movement of the input member 30, such that the restriction of the axial position of the rotor hub 20 with respect to the housing 10 is not performed by the input shaft bearing 34, the input member 30, and the hub shaft bearing 22.

However, according to the present invention, because the ridge bearing 47 already restricts the axial position of the rotor hub 20 with respect to the housing 10, there is no problem even though the input member 30 does not restrict the axial position between the housing 10 and the rotor hub 20.

That is, according to the present invention, the hybrid driving module is easily assembled or disassembled, and the connection between the rotary component and the stationary component is secure because the ridge bearing 47 supports the rotor hub 20 in the axial direction even though the pressure in the first operation chamber 430 increases.

Further, the capacity of the hub shaft bearing 22 may be reduced, and the hub shaft bearing 22 may be designed as a radial bearing, such that the unit price may be reduced, and a more compact design in the axial direction is possible.

While the present invention has been described above with reference to the accompanying drawings, the present invention is not limited to the drawings and the embodiments disclosed in the present specification, and it is apparent that the present invention may be variously changed by those skilled in the art without departing from the technical spirit of the present invention. Further, even though the operational effects of the configurations of the present invention have not been explicitly disclosed and described in the description of the embodiment of the present invention, the effects, which can be expected by the corresponding configurations, should, of course, be acceptable.

## Claims

1. A hybrid driving module, which is disposed between an engine and a transmission in a power system and has a motor (50) configured to provide power to the transmission, the hybrid driving module comprising:
a housing (10) to which a stator (51) is fixed;
a rotor hub (20) to which a rotor (52) is fixed, the rotor hub (20) being disposed rearward of the housing (10) in an axial direction;
a hub ridge (40) disposed between the housing (10) and the rotor hub (20) and connected to the rotor hub (20) at a radial outer side thereof so as to be restricted in rotation;
a ridge bearing (47) disposed between the hub ridge (40) and the housing (10) and configured to connect the hub ridge (40) and the housing (10) so that the hub ridge (40) is rotatable relative to the housing (10); and
a ridge fixing member (49) detachably fastened to the rotor hub (20) to restrict a forward movement of the hub ridge (40) relative to the rotor hub (20),
wherein the ridge bearing (47) aligns the hub ridge (40) and the housing (10) in a radial direction and restricts the hub ridge (40) and the housing (10) in the two axial directions, and
wherein an assembling hole (12) is provided in a portion of the housing (10) that faces a fastening portion between the ridge fixing member (49) and the hub ridge (40) in the axial direction.

2. The hybrid driving module of claim 1, wherein one or two or more assembling holes (12) are provided in the housing (10) in a circumferential direction.

3. The hybrid driving module of claim 1, wherein a sealing cap (13) is detachably installed in the assembling hole (12) and seals the assembling hole (12).

4. The hybrid driving module of claim 1, wherein the ridge fixing member (49) comprises a ridge snap ring (49) provided forward of the hub ridge (40) and fitted with a snap groove (242) recessed in the rotor hub (20) in the radial direction.

5. The hybrid driving module of claim 4, wherein the rotor hub (20) has an axial extension portion (24) configured to fix the rotor (52), and
wherein the snap groove (242) is provided in an outer peripheral surface or an inner peripheral surface of the axial extension portion (24).

6. The hybrid driving module of claim 5, wherein the rotor (52) is disposed at a radial outer side of the axial extension portion (24),
wherein a centrifugal end of the hub ridge (40) is disposed forward of the rotor (52), and
wherein an elastic spacer (28) is interposed between the hub ridge (40) and the rotor (52) in the axial direction and configured to be elastically transformed in the axial direction.

7. The hybrid driving module of claim 4, wherein an outer diameter of a centrifugal end of the hub ridge (40) is larger than an inner diameter of the ridge snap ring (49).

8. The hybrid driving module of claim 4, wherein a protrusion portion (411) is provided at a centrifugal end of the hub ridge (40) and protrudes forward.

9. The hybrid driving module of claim 8, wherein an inner diameter of the protrusion portion (411) is larger than an outer diameter of the ridge snap ring (49).

10. The hybrid driving module of claim 1, wherein a finger portion (241) is provided forward of the rotor hub (20), extends forward from the rotor hub (20), and is disposed to be spaced apart from the rotor hub (20) in a circumferential direction,
wherein a hub coupling portion (41), which is penetrated by the finger portion (241) in the axial direction, is provided on the hub ridge (40), and
wherein the finger portion (241) interferes with the hub ridge (40) in the circumferential direction in the state in which the finger portion (241) penetrates the hub coupling portion (41), such that the hub ridge (40) is restricted in rotation with respect to the rotor hub (20).

11. The hybrid driving module of claim 10, wherein the hub coupling portion (41) has a hole shape penetratively formed in the axial direction or a groove shape penetratively formed in the axial direction and opened in a centrifugal direction.

12. The hybrid driving module of claim 1, wherein one of a radial outer side or a radial inner side of the ridge bearing (47) is supported by the housing (10), and the other of the radial outer side and the radial inner side of the ridge bearing (47) is supported by the hub ridge (40),
wherein one of a front side or a rear side of one side of the ridge bearing (47) is supported by the housing (10), and the other of the front side and the rear side of one side of the ridge bearing (47) is supported by a first bearing snap ring (15) fastened to the housing (10), and
wherein one of a front side or a rear side of the other side of the ridge bearing (47) is supported by the hub ridge (40), and the other of the front side and the rear side of the other side of the ridge bearing (47) is supported by a second bearing snap ring (422) fastened to the hub ridge (40).

13. The hybrid driving module of claim 12, wherein a radial outer side of the ridge bearing (47) is supported by the hub ridge (40), and a radial inner side of the ridge bearing (47) is supported by the housing (10), and
wherein a front side of the radial inner side of the ridge bearing (47) is supported by the housing (10), and a rear side of the radial inner side of the ridge bearing (47) is supported by the first bearing snap ring (15).

14. The hybrid driving module of claim 13, wherein a rear side of the radial outer side of the ridge bearing (47) is supported by the hub ridge (40), and a front side of the radial outer side of the ridge bearing (47) is supported by the second bearing snap ring (422).

15. The hybrid driving module of claim 1, further comprising:
a piston plate (43) disposed rearward of the hub ridge (40), installed on the hub ridge (40), and configured to be slidable in the axial direction.

16. The hybrid driving module of claim 15, further comprising:
a compensation plate (45) provided rearward of the piston plate (43), installed on the hub ridge (40), and configured such that the piston plate (43) is slidably connected to the compensation plate (45).

17. The hybrid driving module of claim 15, further comprising:
an engine clutch (37) disposed between the piston plate (43) and the rotor hub (20) in the axial direction and configured to selectively transmit power of the engine to the rotor hub (20).

18. The hybrid driving module of claim 17, further comprising:
an input member (30) disposed between the engine and the engine clutch (37) and configured to connect the engine and the engine clutch (37);
a hub shaft bearing (22) configured to connect the input member (30) and the rotor hub (20) so that the input member (30) is rotatable relative to the rotor hub (20); and
an input shaft bearing (34) configured to connect the input member (30) and the housing (10) so that the input member (30) is rotatable relative to the housing (10),
wherein the hub shaft bearing (22) aligns the input member (30) and the rotor hub (20) in the radial direction,
wherein the input shaft bearing (34) aligns the input member (30) and the housing (10) in the radial direction,
wherein only a first bearing selected from the hub shaft bearing (22) and the input shaft bearing (34) restricts a forward movement of the input member (30), and
wherein only a second bearing selected from the hub shaft bearing (22) and the input shaft bearing (34) restricts a rearward movement of the input member (30).

19. The hybrid driving module of claim 18, wherein the first bearing and the second bearing are the same bearing.

20. The hybrid driving module of claim 19, wherein the first bearing and the second bearing are different bearings.

21. The hybrid driving module of claim 18, wherein the hub shaft bearing (22) is disposed between the input member (30) and the rotor hub (20).

22. The hybrid driving module of claim 18, wherein the input shaft bearing (34) is disposed between the input member (30) and the housing (10).
